# EUROPEAN PATENT SPECIFICATION

(11) **EP 2 583 991 B1**
(45) Date of publication and mention of the grant of the patent: **27.03.2019**
(21) Application number: 11185440.2
(22) Date of filing: 17.10.2011
(51) Int. Cl.: C08G 77/46, C08G 18/50, C08G 18/61, C09D 175/04, C09D 5/16, C09D 183/12, C08G 18/75

(54) **Hydrophilic Polysiloxane-Based Coating Compositions**
Hydrophile polysiloxanbasierte Beschichtungszusammensetzungen
Compositions de revêtement hydrophile à base de polysiloxane

(43) Date of publication of application: 24.04.2013
(73) Proprietor: Momentive Performance Materials GmbH, 51368 Leverkusen (DE)
(72) Inventor: Käsler Karl-Heinz, 51375 Leverkusen (DE); Geismann Christian Dr., 51467 Bergisch Gladbach (DE); Wagner Roland Dr., 53227 Bonn (DE); Koopmans Carsten Dr., 40589 Düsseldorf (DE); Hoffmueller Gunnar, 51519 Odenthal (DE); Möller Martin Prof. Dr., 52070 Aachen (DE); Groll Jürgen Prof. Dr., 97078 Würzburg (DE)
(74) Representative: Gille Hrabal

(56) References cited:
- JP-A- 8 134 153
- JP-A- 2009 185 169
- US-A- 3 179 622
- US-A- 4 136 250

## Description

This invention relates to hydrophilic polysiloxane-based coating compositions, prepared from star-like polysiloxane polymers with hydrophilic arms which carry isocyanate groups for the production of hydrophilic coatings. In particular, the hydrophilic polyorganosiloxane-based coating compositions are effective as anti-fouling coatings in particular against settling of marine organism. The hydrophilic polysiloxane-based coating compositions are also effective to suppress non-specific protein adsorption and cell colonization, which is important in the medical field, for example in the case of catheters, contact lenses or prostheses. Also biological deposits of proteins or bacteria can be prevented to keep surfaces clean.

In particular biological deposits on extremely large wetted surfaces, such as ship hulls, water tanks and the like, and deposits in inaccessible places, such as large pipe systems, represent a major economic problem. The anti-plaque coatings used at present are mostly toxic organometallic compounds or lose their bactericidal effect very quickly.

Accordingly, the formation of plaque and biofouling represent a serious economic and ecological problem which, hitherto, has not been satisfactorily solved.

Hydrophilic water-swelling so called hydrogel-forming coatings are known from the prior art to reduce non-specific cell and protein adsorption. Also hydrophilic polysiloxane-based hydrogel-forming coatings are known. For example, JP-A-2009-185169 discloses polyether-modified polyorganosiloxanes having cross-linkable alkoxysilyl groups. US 4,136,250 discloses acrylate-based polysiloxane hydrogels. Coating films prepared from these polyorganosiloxane exhibit anti-fouling properties. Curing rate of the alkoxysilyl-polyether-polyorganosiloxanes is however very low, leading for example to long maintenance times of ships which are coated accordingly. Also achievable crosslinking densities of those alkoxysilyl-polyether-polyorganosiloxanes are low leading to low mechanical strength and high abrasion losses in particular during cleaning operations.

Accordingly the object underlying the present invention was accordingly to provide a fast curable, non-toxic, high-strength anti-fouling coating composition having long life-times.

Surprisingly it has been found that the problem stated above can be solved by the provision of specific isocyanate-functional hydrophilic polyorganosiloxane -based coating compositions.

Accordingly the present invention relates in one aspect to a process for coating substrates, which comprises applying the reaction product obtained by the reaction of at least one polyorganosiloxane compound a) of the formula (I):

Z[-X(-A-Yₙ)_{q}]ₘ (I)

wherein
Z denotes a polyorganosiloxane unit, preferably having from 2 to 12000 silicone atoms in average, more preferably 2 to 1000 silicone atoms, more preferably 2 to 100 silicone atoms,
X denotes a chemical bond or an organic residue having 1 to 50 carbon atoms, wherein
X is bond to a silicon atom of the polyorganosiloxane unit via a carbon atom,
A denotes a hydrophilic polymeric unit, which may be the same or different unit in the compound of formula (I), comprising as hydrophilic moieties those selected from poly-C₂-C₄-alkylene oxide groups, polyetherester groups, polyetheramide groups, polyoxazolidone groups, polyvinyl alcohol groups, homo- and copolymer groups that contain at least 50 wt % polymerized-in N-vinylpyrrolidone, homo- and copolymers that contain at least 30 wt % polymerized-in acrylamide and/or methacrylamide, homo- and copolymer groups that contain at least 30 wt % polymerized-in acrylic acid and/or methacrylic acid, or
A denotes a hydrophilic polymeric unit, which may be the same or different unit in the compound of formula (I) selected from polyether groups, more preferably from polyethylene oxide or polyethylene oxide/polypropylene oxide copolymer groups, the latter being statistical or block copolymer groups, more preferably are block copolymer groups,
Y is selected from -OH, -SH, -NH₂, and -NHR⁴, wherein R⁴ is hydrocarbyl group having up to 10 carbon atoms,
q is from 1 to 5,
m is from 3 to 100,
n is from 1 to 5,
and at least one polyisocyanate b), with the proviso that the molar ratio of the components a) and b) is such that the reaction product contains reactive isocyanate groups, or
a polyorganosiloxane-polyisocyanate of the formula:

   Z{-X[-A-[Y'-C(=O)-NH-E-(NCO)ₚ]ₙ]_{q}}ₘ (III)

   wherein
   the group Z, X, A, q, m, n are each as defined above,
   Y' denotes a group derived from the addition of the group Y to the NCO-group,
   E denotes an organic residue,
   p is from 1 to 5,
   onto a substrate and curing the reaction product to obtain a coating onto the substrate.

To ensure that the reaction product contains reactive isocyanate groups there must be a molar excess of the isocyanate groups in the polyisocyanate b) compared to the hydroxyl groups in the polyorganosiloxane compound a). Preferably the molar ratio NCO/OH is greater than 1, preferably greater than 2.

In the polysiloxane compound a) the group Z is preferably a polyorganosiloxane moiety of the formula

[MₐD_{b}T_{c}Q_{d}]ₑ (II)

wherein
M = R₃SiO_{1/2},
D = R₂SiO_{2/2},
T = RSiO_{3/2},
Q = SiO_{4/2},
with
a = 0-50,
b = 0-500,
c = 0-50,
d = 0-50,
e = 1-500,
wherein
a+b+c ≥ 1, and wherein
R is selected from R¹, OR², and a divalent residue R³, wherein R¹ is an organic residue bond to a silicone atom via a carbon atom, R² is an organic residue bond to the oxygen atom via a carbon atom, R³ is a divalent organic residue connecting two siloxy groups, with the proviso that the group R comprises at least one group R¹, wherein such polyorganosiloxane moiety Z has free valencies at the silicon atoms to bind the groups [-X(-A-Y)_{q}] as defined above.

R¹ is preferably selected from C₁ to C₂₀₀ alkyl or C₂ to C₂₀ alkenyl, the alkyl group being optionally containing one or more groups selected from -O-, -NH-, -C(O)- and -C(S)- and may optionally be substituted by one or more groups of the formula

-Si(OR³)₃₋ₓ(R⁴)ₓ

in which x is an integer from 0 to 2 and R³ and R⁴ is selected from C₁ to C₄-alkyl, or C₂ to C₆-alkenyl, or phenyl, preferred methyl and phenyl. R¹ covers with it also the presence of polyether structural elements comprising alternating -O- and alkylene groups.

If R¹ comprises -Si(OR³)₃₋ₓ(R⁴)ₓ groups, this allows, in particular, to modify the curing rates and the adhesion properties of the coating compositions of the invention. Such alkoxy silyl groups might be introduced into the reaction product of components a) and b) by either first reacting the component a) with for example isocyanate-functional alkoxy silanes wherein the molar ratio of the isocyanate groups to the hydroxy groups is less than 1, thereby leaving unreacted hydroxyl groups for the subsequent reaction with the polyisocyanate b).

R² is an organic residue bond to the oxygen atom via a carbon atom, thus forming an Si-O-R² group, wherein R² is preferably an optionally substituted C₁ to C₂₀₀ saturated or unsaturated alkoxy group optionally having one or more oxygen atoms. Although the presence of such Si-O-R² group in the polyorganosiloxane moiety Z is less preferred, it might be formed in particular as a side reaction in the formation of the polyorganosiloxane compound a) from SiH-functional polysiloxanes with in particular hydroxyl-functional allyl polyethers (as explained in detail below), by the non-desired reaction of the hydroxyl group with an SiH-group thereby forming the Si-OR² group. Nevertheless it is in principle possible to deliberately introduce Si-OR² groups into the polyorganosiloxane compound a) by reacting hydroxyl-functional compounds with the Si-H-functional polysiloxane starting material, for example, to create a further condensation curing site to modify the curing properties of the reaction product obtained by reacting components a) and b) as defined herein.

R³ is a divalent organic residue connecting two siloxy groups, wherein the residue is bond via a carbon atom to a silicone atom and/or via an oxygen atom, including an optionally substituted C₁ to C₂₀₀ saturated or unsaturated hydrocarbyl group optionally having one or more oxygen atoms. While the presence of groups R³ is not preferred such groups may be introduced into the polyorganosiloxane moiety Z in a side reaction in the formation of the polyorganosiloxane compound a) of the formula (I) by reacting e.g. hydroxyl-functional allyl polyethers with SiH-functional polysiloxanes (as explained in detail below), by the non-desired reaction of the hydroxyl group with an SiH-group and the reaction of the allyl group with another SiH-group thereby forming the Si-R³-Si group (wherein one side is bond via an Si-O-C-bond and the other side of the R³ group is bond via an Si-C-bond. Nevertheless it is in principle possible to deliberately introduce Si-R³-Si groups into the polyorganosiloxane compound a) by reacting di-functional compounds with the Si-H-functional polysiloxane starting material, for example, to introduce adhesion-modifying groups.

In a preferred embodiment of the invention the linking group X is an aliphatic organic residue having up to 20 carbon atoms, optionally comprising one to three heteroatoms. Such linking groups X basically result from the the reactive moieties attached to the hydrophilic group A, which reactive moieties are used to react with the polyorganosiloxane moiety Z. More preferred the linking group X has 1 to 12, even more preferred 1 to 10 carbon atoms. These linking groups X may contain one to three heteroatoms, which may be selected from nitrogen, oxygen, and sulphur, preferably oxygen. In accordance with the index q the linking group X can be a di- to hexavalent organic residue, preferably the linking group X is a di- or trivalent organic residue. Examples of di- or trivalent organic residues X encompass saturated, unsaturated, straight chained, branched, cyclic aliphatic, hetereoaliphatic, araliphatic, heteroaraliphatic, cycloaliphatic, cycloheteroaliphatic, and aromatic and heteroaromatic residues preferably having up to 12 carbon atoms. Examples are:
-(CH₂)ₙ-, with n being 1 to 20, preferably 1 to 12, optionally replacing one CH₂-group by -O- and optionally being substituted by one hydroxyl group, specifically:

-CH₂CH₂CH₂-

-CH₂CH₂CH(CH₃)-

-CH₂CH₂CH₂CH₂CH₂CH₂-

-CH₂CH₂(CH₂)₉-

-CH₂CH₂CH₂-O-CH₂CH (OH)CH₂-

such groups being generated by the hydrosilylation reaction of the corresponding alphaolefins;
trifunctional residues e.g.: 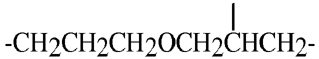 di- or trifunctional alkylcycloalkyl groups optionally being substituted by one hydroxyl group, with up to 12 carbon atoms, specifically: 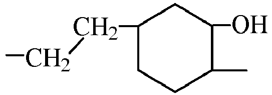 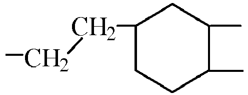 alkylene groups resulting from the hydrosilylation reaction of the corresponding alkinyl compounds, specifically

-CH=CHCH₂-

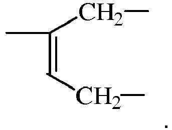

Also X includes the groups:

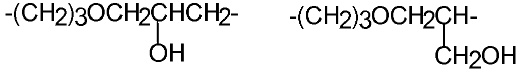

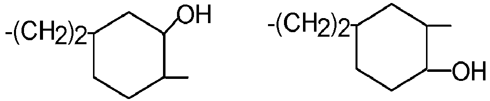

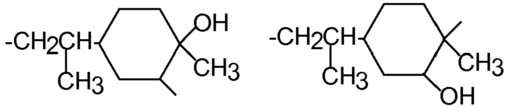

-(CH₂)-, -(CH₂)₂-, -(CH₂)₃- , -(CH₂)₄-, -(CH₂)₅-, -(CH₂)₆-,

-CH=CHCH₂-, -CH=CHCH₂CH₂-,

-CH₂CH₂CH₂OC(O)CH₂-, -CH₂CH₂CH₂OC(O)CH₂CH₂-,

-CH=CHCH₂OC(O)CH₂-, -CH=CHCH₂OC(O)CH₂CH₂-.

The usage of trifunctional X moieties yields branched structures having two A segments attached to one X moiety.

Most preferred group X is a -CH₂CH₂CH₂-group, resulting from the hydrosilylation reaction with the corresponding allyl compounds.

The residue A denotes a di- to hexavalent, preferably di- or trivalent, more preferably a divalent hydrophilic polymeric unit selected from polyether groups such as poly-C₂-C₄-alkylene oxide groups, polyetherester groups, polyetheramide groups, polyoxazolidone groups, polyvinyl alcohol groups, homo- and copolymer groups that contain at least 50 wt % polymerized-in N-vinylpyrrolidone, homo- and copolymers that contain at least 30 wt % polymerized-in acrylamide and/or methacrylamide, homo- and copolymer groups that contain at least 30 wt % polymerized-in acrylic acid and/or methacrylic acid. Particularly preferably, the residue A is selected from polyether groups, more preferably from polyethylene oxide or polyethylene oxide/polypropylene oxide copolymer groups, the latter being statistical or block copolymer groups, more preferably are block copolymer groups.

Very particularly preferred A denotes a di- or tri, preferably divalent hydrophilic polymeric unit, selected from ethylene oxide / propylene oxide (preferably block) copolymer groups, wherein the number of the ethylene oxide units exceeds the number of the propylene oxide groups, such as types like Nissan Uniox®, Unilube® of Nippon Oil & Fat Co., Ltd, Pluriol® of BASF, Rhodasurf® of Rhodia, Adeka Carpol® of Carpenter or Breox® of Cognis.

Preferably the ethylene oxide/propylene oxide copolymer groups are used, a propylene oxide proportion of at most 60 wt %, by preference at most 30 wt %, and particularly preferably at most 20 wt %, is recommended, such as Unilube® 80 MA70 of Nippon Oil & Fat Co., Ltd..

In a specific case the propylene oxide portion is zero, such as BREOX® AAE 450 H of Cognis.

If more than one monomer type is used the polyalkylene oxides can be statistical or block copolymer groups, the block copolymers are preferred.

The molecular weight of the alkylene oxide polymer groups ranges from 44 to 20.000, preferred 100 to 10.000, more preferred 100 to 5.000, specific 100 to 2000, more specifically 100 to 1.000 g/mol.

Specific hydrophilic polymer groups A include:
-O-[(CH₂CH₂O)ᵣ-(CH₂CH(CH₃)O)ₛ]-L- with L being (CH₂CH₂) or (CH₂CH(CH₃)) (statistical or block-type arrangement, preferably block copolymer group, wherein the propylene oxide group can be in any arrangement, i.e. -CH₂CH(CH₃)- or
-CH(CH₃)CH₂-), preferably with r > 1, s ≥ 0, r > s and r + s < 50; preferably r + s < 20;

Preferred groups -X-A- include:
-(CH₂)₃O-[CH₂CH₂O]ᵣ-[CH₂CH(CH₃)O]ₛ-, with r and s as defined before.

Higher valent hydrophilic polymer groups A comprise branched polyether groups derived from alkylene oxide started polyols like for example glycerol, trimethylol propane, pentaerythritol, sugars, like sorbitol, mannitol etc.

Such higher valent hydrophilic polymer groups A comprise for examples polyether groups of the formulas: 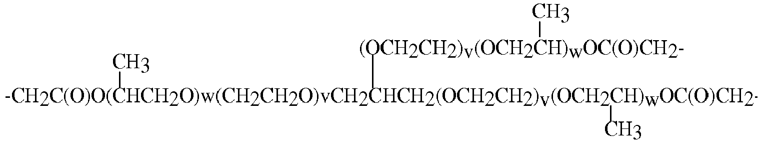 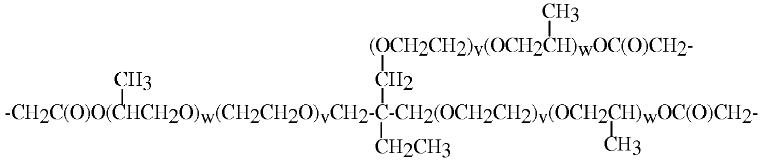 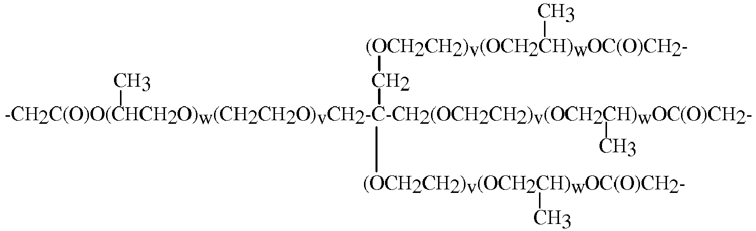 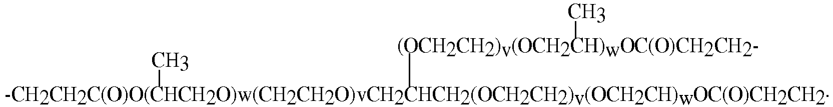 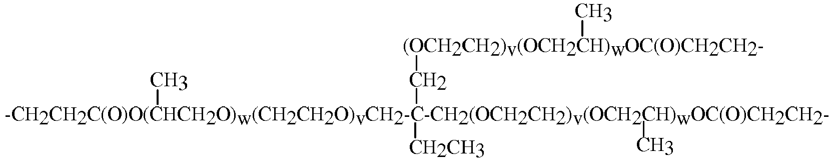 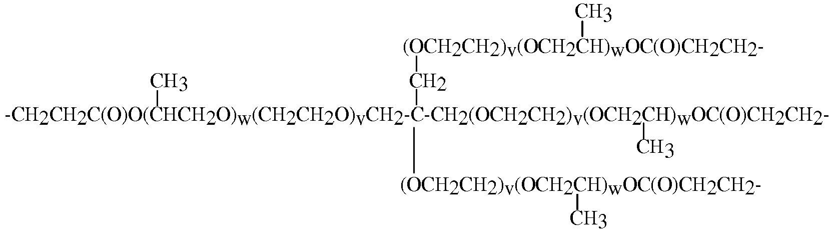 wherein preferably v+w ≥ 0, with statistical and/or block type arrangement, preferably block type arrangement of the ethylene and propylene oxide units are used.

Another specific class of hydrophilic polymer groups A result from polyalkylene oxide diamines, which are commercial available as Jeffamines®, which groups thus include:
-NH-[(CH₂CH₂O)ᵣ-(CH₂CH(CH₃)O)ₛ]-L- with L being (-CH₂CH₂-) or
(-CH₂CH(CH₃) -) (statistical or block-type arrangement, preferably block copolymer group, wherein the propylene oxide group can be in any arrangement, i.e.
-CH₂CH(CH₃)- or -CH(CH₃)CH₂-), preferably with r > 1, s ≥ 0, r > s and r + s < 50; preferably r + s < 20.

Preferred starting materials for preparing corresponding hydrophilic polymer groups A having amino functionality result from polyalkylene oxide diamines of the formula: 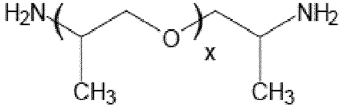 (JEFFAMINE® D Series with x being about 2.5 to 68); 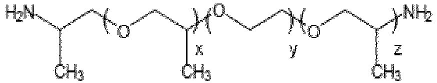 (JEFFAMINE® ED Series with y being about 2 to 39, x + z being about 1.2 to 6.0).

Higher, in particular, trivalent hydrophilic polymer groups A having amino functionality result from polyalkylene oxide triamines of the formula: 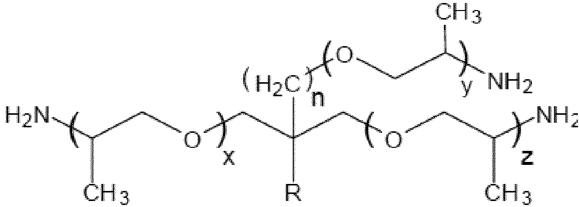 (JEFFAMINE® T Series with n being 0 or 1, x+y+z being about 5 to 85).

"n" in formula (I) denotes the number of functional groups Y attached to the hydrophilic polymeric units A. Accordingly the index n is from 1 to 5, preferably 1 to 3, still more preferably 1 or 2, and even more preferred n=1.

Y is selected from -OH, -SH, -NH₂, and -NHR⁴, wherein R⁴ is hydrocarbyl group having up to 10 carbon atoms. Preferably Y is -OH or -NH₂. Most preferably Y is -OH.

"q" is from 1 to 5, preferably, q is from 1 to 3, even more preferably q is 1 or 2, and most preferably q is 1.

"m" denotes the average number of valencies of the polysiloxane groups Z in formula (I) and is from 3 to 100, preferably from 3 to 60, more preferably from 3 to 30, even more preferably from 3 to 20, even more preferably from 3 to 10.

In the process according to the invention the polyisocyanates b) preferably are selected from the group of aliphatic and/or aromatic polyisocyanates.

There can be used as polyisocyanates b) any aromatic, araliphatic, aliphatic and cycloaliphatic isocyanates known to the person skilled in the art having a mean NCO functionality of preferably ≧2, and mixtures thereof. They can also contain iminooxadiazinedione, isocyanurate, uretdione, urethane, allophanate, biuret, urea, oxadiazinetrione, oxazolidinone, acylurea and/or carbodiimide structures. Preference is given to the use of isocyanates from the group of the aliphatic or cycloaliphatic representatives, these preferably having a carbon skeletal structure (without the NCO groups that are present) of from 3 to 30, preferably from 4 to 20, carbon atoms. Particularly preferred polyisocyanates correspond to the above-mentioned type having aliphatically and/or cycloaliphatically bonded NCO groups, such as, for example, bis-(isocyanatoalkyl)-ethers, bis- and tris-(isocyanatoalkyl)-benzenes, -toluenes and -xylenes, propane diisocyanates, butane diisocyanates, pentane diisocyanates, hexane diisocyanates (e.g. hexamethylene diisocyanate, HDI), heptane diisocyanates, octane diisocyanates, nonane diisocyanates (e.g. trimethyl-HDI (TMDI), generally in the form of a mixture of the 2,4,4- and 2,2,4-isomers), nonane triisocyanates (e.g. 4-isocyanatomethyl-1,8-octane diisocyanate), decane diisocyanates, decane triisocyanates, undecane diisocyanates, undecane triisocyanates, dodecane diisocyanates, dodecane triisocyanates, 1,3- and 1,4-bis-(isocyanatomethyl)cyclohexane (H6XDI), 3-isocyanatomethyl-3,5,5-trimethylcyclohexyl isocyanate (isophorone diisocyanate, IPDI), bis-(4-isocyanatocyclohexyl)-methane (H12MDI) or bis(isocyanatomethyl)norbornane (NBDI). Most particularly preferred polyisocyanates are hexamethylene diisocyanate (HDI), trimethyl-HDI (TMDI), 2-methylpentane-1,5-diisocyanate (MPDI), isophorone diisocyanate (IPDI), 1,3- and 1,4-bis(isocyanatomethyl)cyclohexane (H6XDI), bis(isocyanatomethyl)norbornane (NBDI), 3(4)-isocyanatomethyl-1-methyl-cyclohexylisocyanate (IMCI) and/or 4,4'-bis(isocyanatocyclohexyl)methane (H12MDI) or mixtures of these isocyanates, in particular isophorone diisocyanate (IPDI). Further examples are derivatives of the above diisocyanates having a uretdione, isocyanurate, urethane, allophanate, biuret, iminooxadiazinedione and/or oxadiazinetrione structure with more than two NCO groups.

The molar ratio of the components a) of formula (I) and b), the polyisocyanates is such that the reaction product obtained contains reactive isocyanate groups. Accordingly preferably the number of isocyanate groups exceeds the number of the reactive groups Y, in particular -OH (leading to the formation of urethane groups) or -NH₂ leading to the formation of urea groups).

The molar amount of polyisocyanates (b) used to prepare the reaction product is preferably from ≥ 2.0, preferably >2.0 to 5.0 mol, particularly preferably from 2.1 to 4 mol, especially from > 2.1 to 3.5 mol, in each case based on the molar amount of the reactive groups Y in the polyorganosiloxane compound a) of formula (I).

In the polyorganosiloxane-polyisocyanate of the formula:

Z{-X[-A-[Y'C(=O)-NH-E-(NCO)ₚ]ₙ]_{q}}ₘ (III)

the group Z, X, A, q, m, n are each as defined above,
Y' denotes a group derived from the addition of the group Y to the NCO-group, in particular-O-, -S-, -NH-, -NR⁴-, with R⁴ being defined as above,
E denotes an organic residue, which is derived from the polyisocyanate(s) which reacted with the polysiloxane of the formula (I),
p is from 1 to 5, preferably 1 to 3, more preferably 1 or 2, most preferably 2.

In a further preferred embodiment of the present invention in the polyorganosiloxane-polyisocyanate(s) the polyorganosiloxane moiety Z comprises at least one group R¹ having at least one alkoxysilyl group, and/or at least one group -OR², wherein R¹ and R² are each defined above. Such groups alkoxysilyl groups are particular suitable as so-called anchor groups, which are particularly reactive towards inorganic substrates, like in particular metals, surface-treated metals, metal oxides, e.g. silica, zinc oxide, titanium dioxide, aluminum oxide, zirconium oxide, magnesium oxide, or iron oxide, metal carbonates, e.g. calcium carbonate, carbon, in particulars, nanoparticle (having average particle diameters of e.g. 2 to 5000 nm (determined by light-scattering and analyzed preferably according to the Mie-theory), comprising preferably hydroxyl groups at the surface thereof. Accordingly such functionality allows immobilizing the composition of the invention or the reaction product of the invention or the polysiloxane-polyisocyanate according the invention onto such substrates, whereby they exhibit their anti-fouling and/or protein-repellent effect. Such treated particles can be also used as part of conventional coating compositions.

The polyorganosiloxane-polyisocyanate (III) and the polyorganosiloxanes (I), (I') (as shown below) can be used also in general as additive in other binder compositions applied in coatings, in particular in anti-fouling coatings. Preferred other binder materials are selected from the group of NCO-, amino- or hydroxyl functional polymers including organofunctional siloxane resins, specifically preferred are epoxy-, methacryl- and acryl-functional siloxane resins used as coating compositions for ship hulls. In one preferred embodiment the polyorganosiloxanes of the formula (I), (I') or (III) can build-up networks with the additional binder compounds providing reactive groups for the NCO functions in the inventive siloxanes. In another preferred embodiment the inventive polyorganosiloxanes of formula (III) after reaction with water or humid air react to form a hydrogel having urea groups. These hydrogels are in majority solid materials at 25°C and can be used as anti-fouling additives in coating compositions.

The amount of the polyorganosiloxanes of the formula (I), (I') or (III) or their crosslinked hydrogels in other coating compositions can be in the range of 10-99 wt.%.

As to the curing mechanism is possible in principle the curing occurs by the interaction of the free isocyanate groups with humidity, thereby forming amino groups (and carbon dioxide) which react further with free isocyanate groups. It is also possible to add isocyanate reactive crosslinkers like polyols or polyamines to the isocyanate.

The present invention further relates to the use of the the reaction product as defined above or the polysiloxane-polyisocyanate (III) as defined above for the manufacture of coating compositions, in particular to the use for the manufacture of anti-fouling coatings.

Furthermore the invention relates to a coating composition comprising the reaction product as defined above, or the polysiloxane-polyisocyanate (III) as defined above.

In particular the present invention is useful for the production of ultra-thin, hydrogel-forming coatings. In particular with the coating composition of the present invention dry film thicknesses of about 1 µm to 500 µm can be prepared. Preferably dry film thicknesses of 10 to 200 µm are prepared.

In the polysiloxanes of the formula (I'):

Z[-X(-A-Yₙ)_{q}]ₘ (I')

Z denotes an at least one polyorganosiloxane unit,
X denotes a chemical bond or an organic residue having 1 to 50 carbon atoms,
A denotes a hydrophilic polymeric unit, selected from ethylene oxide / propylene oxide copolymer groups, wherein the number of the ethylene oxide units exceeds the number of the propylene oxide groups,
Y is selected from -OH, -SH, -NH₂, and -NHR⁴, wherein R⁴ is hydrocarbyl group having up to 10 carbon atoms,
q is from 1 to 5,
m is from 3 to 1000,
n is from 1 to 5.

E which denotes an organic residue, which is derived from the polyisocyanate(s) which react with the polysiloxane of the formula (I), include for example divalent straight chained hydrocarbyl groups having up to 15 carbon-atoms, for example hexamethylene, divalent cyclic hydrocarbons with up to 15 C-atoms, for example bis-cyclohexyl-methane, 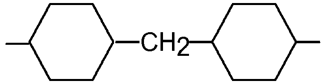 for example methylcyclohexyl- oder isophorone structures, 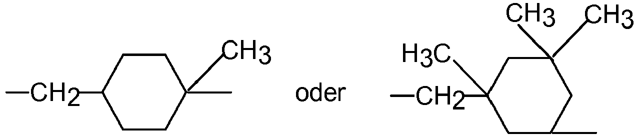 divalent aromatic hydrocarbons with up to 15 carbon-atoms, for example 2,4-toluyl, 2,6-toluyl, bis-phenyl-methane- und naphthyl structures,

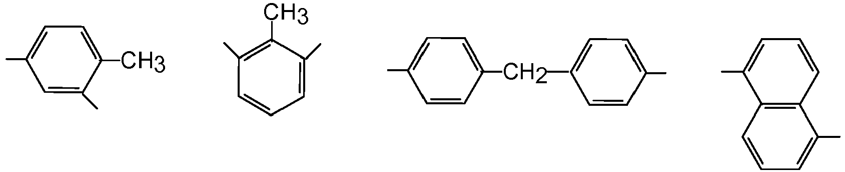

Further the group E is derived from the difunctional reaction products of difunctional alcohols or difunctional polyalkylene oxides, preferentially ethylene oxide, proylene oxide, butylene oxide based, difunctional primary or secondary amino-polyethers, for example of the Jeffamine types (Huntsman Corp.), with diisocyanates, toluene diisocyanate dimer and isophorone diisocyanate dimer. Examples for triisocyanates are toluene diisocyanate trimer and isophorone diisocyanate trimer.

An advantage of the hydrogel coating according to the present invention as compared with known hydrogel coatings is that its properties can be defined in controlled fashion by appropriate selection of in particular the residues Z and A and the ratio thereof. For example, the wettability, water swellability, and protein and cell repellency can be influenced by controlled adjustment of the in particular Z and A and the ratio thereof.

In a further embodiment of the present invention the coating composition comprising the isocyanate-functional reaction product may comprise further auxiliaries by preference selected from the group comprising biologically active substances, pigments, dyes, fillers, silicic acid units, nanoparticles, organosilanes, biological cells, receptors or receptor-carrying molecules or cells. Examples of such auxiliaries are bioactive materials such as active substances, biocides, oligonucleotides, peptides, proteins, signalling substances, growth factors, cells, carbohydrates and lipids, inorganic components such as apatites and hydroxyapatites, quaternary ammonium salt compounds, compounds of bisguanidines, quaternary pyridinium salt compounds, compounds of phosphonium salts, thiazoylbenzimidazoles, sulfonyl compounds, salicyl compounds, or organometallic and inorganometallic compounds. Antibacterially acting substances such as, for example, peptides, metal colloids, and quaternary ammonium and pyridinium salt compounds are preferred. A further auxiliary material is represented by organically functionalized silanes (organosilanes) of the type (R')₁₊ₓSi(OR")₃₋ₓ (x=0, 1, or 2). What is characteristic here is the simultaneous presence of silic acid ester groups (OR") that hydrolyze in aqueous solution to yield condensable silanol groups (Si-OH), and of Si-R' bonds on the same silicon atom stable against hydrolysis, these bonds usually comprising a covalent Si-C single bond.

The substrates to be coated with the coatings of the present invention are subject, in principle, to no limitations. The substrates can have regularly or irregularly shaped, smooth, or porous surfaces. Suitable surface materials are, for example, glass-like surfaces such as glass, quartz, silicon, silicon dioxide, or ceramic, or semiconductor materials, metal oxides, metals, and metal alloys such as aluminum, titanium, zirconium, copper, tin, and steel. Composite materials such as glass-fiber-reinforced (GFR) or carbon-fiber-reinforced (CFR) plastics, polymers such as polyvinyl chloride, polyethylene, polymethylpentene, polypropylene, polyolefins in general, elastomeric plastics such as polydimethylsiloxane, polyesters, fluoropolymers, polyamides, polyurethanes, poly(meth)acrylates, polyepoxides and copolymers, blends, and composites of the aforesaid materials, are suitable as substrates. Cellulose and natural fibers such as cotton fibers, wool, and hair can additionally be used as substrates. Mineral surfaces such as paint coatings or joint material can, however, also serve as substrates. For polymer substrates, it is advisable in some cases to pretreat the surface. Particularly preferred substrate materials are glass-like or, in general, inorganic surfaces, glass, ceramic, plastic, and metal substrates, for example, the finishing of showers, windows, aquariums, glasses, dishware, sinks, toilets, work surfaces, or kitchen appliances such as, for example refrigerators or stoves, ship hulls with and without precoats to prevent corrosion or adhesion layers which enable further coating such as epoxies or tie coats with an easily cleanable temporary or permanent finish that enables water to run off completely, and repels proteins and bacteria.

A further subject of the present invention is a method for producing the coatings according to the present invention on a substrate, such that a solution of a star-shaped isocyanate-functional reaction product is applied onto the substrate to be coated; and, previously, simultaneously, or subsequently, an at least partial cross-linking reaction of the isocyanate groups takes place, in the presence of humidity or crosslinking agents, i.e. isocyanato reactive compounds like polyols or polyamines. At the same anchoring of the optionally present reactive alkoxysilyl groups at the substrate or other reactive moieties in the coating compositions take place.

Preferably the hydrophilic hydrogel coating compositions provides water contact angles (both advancing and receding), measured by means of a Wilhelmy balance per DIN EN 14370 on a planar, smooth surface, is by preference 0.0001 to 90 °, particularly preferably 0.001 to 60 °, and very particularly preferably up to 50 ° or no more than 40 °. The water contact angle hysteresis is by preference no more than 10 °, particularly preferably no more than 5 °.

In general, all known coating methods can be used. Examples thereof are dip coating, spin coating, polishing in, and spray methods. In order to achieve the desired properties of the surface layer, the coating actions are to be selected so that the coating thickness does not exceed by preference a value of 500 µm, particularly preferably 200 µm, and very particularly 100 µm. Depending on the intended applications, a coating must simultaneously meet many different requirements with regard to, for example, mechanical properties, water wetting and water dewetting behaviour, protein and bacteria repellence, and the like. For many cases, especially in the household sector, an ultrathin or thin layer having a layer thickness from 0.1 to 100 nm, in particular 1 to 50 nm, is often sufficient to achieve the desired effects, whereas in applications, for example as a result of high mechanical stress on the surfaces, thicker layers having a layer thickness from, for example, 50 to 500 µm, are desired; for some applications, for example those that provide for a presence of nanoparticles in the coating, greater layer thicknesses such as, for example, 1,000 µm may be desirable. In contrast to other hydrophilic hydrogel coatings known from the state of the art, with the hydrogel coatings according to the present invention hydrophilicity remains to a large extent uninfluenced by layer thickness. In other words, the dirt-, protein-, and cell-repelling properties are obtained independently of layer thickness.

As to the solvents that can be used in the coating compositions all solvents that exhibit little or no reactivity with respect to the reactive isocyanate groups of the star-shaped reaction product according to the invention are generally suitable. Examples are aprotic solvents, or mixtures thereof. Examples of suitable aprotic solvents are, for example, ethers and cyclic ethers such as tetrahydrofuran (THF), dioxane, diethyl ether, tert.-butyl methyl ether, alkoxyethylacetates, aromatic hydrocarbons such as xylenes and toluene, acetonitrile, propionitrile, and mixtures of said solvents.

Suitable quantities of the star-shaped reaction products according to the invention in the mixtures together with solvents that are used for coating are in particular based on the layer thicknesses best suitable for the particular application. Quantities of, for example, 0.005 to 30 wt %, by preference 0.005 to 50 wt %, even more preferred are 0.005 to 100 wt %, are used in the coating composition according to the invention comprising in particular compounds (I), (I'), (III) and reaction products thereof. Depending on the affinity of the substrate and the type of application, application mixtures having a higher or even a lower content of star-shaped reaction products can likewise also be used. The application mixtures can, for example, also take the form of pastes or cremes.

In a preferred embodiment of the invention the polyorganosiloxanes of the formula (I):

Z[-X(-A-Yₙ)_{q}]ₘ (I')

as defined above are manufactured by hydrosilylation of one or more than one monofunctionally unsaturated and preferentially OH terminated polyalkylene oxide derivative with one or more than one poly-SiH functionalized precursor.

The monofunctionally unsaturated and preferentially OH-terminated polyalkylene oxide derivatives are preferentially derived from C1 to C20 alcohols. Examples are
CH₂=CHCH₂OH
CH₂=CHCH(CH₃)OH
CH₂=CHCH₂-CH₂CH₂CH₂OH
CH₂=CH(CH₂)₉OH 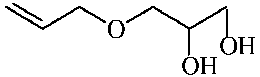 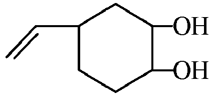 CH≡CCH₂OH

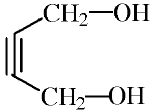

The alkoxylation of these unsaturated alcohols with the corresponding alkylene oxides is state of the art.

The possible usage of diols means that two polyalkylene oxide chains can be attached to one X moiety.

In a preferred embodiment ethylene oxide is used exclusively.

In another preferred embodiment ethylene oxide and propylene oxide are used simultaneously yielding a statistical copolymer.

In another preferred embodiment ethylene oxide and butylene oxide are used simultaneously yielding a statistical copolymer.

In another preferred embodiment propylene oxide and ethylene oxide are used sequentially yielding an alcohol-POx-EOy-OH block copolymer.

In another preferred embodiment ethylene oxide and propylene oxide are used sequentially yielding an alcohol-EOx-POy-OH block copolymer.

In another preferred embodiment butylene oxide and ethylene oxide are used sequentially yielding an alcohol-BOx-EOy-OH block copolymer.

In another preferred embodiment ethylene oxide and butylene oxide are used sequentially yielding an alcohol-EOx-BOy-OH block copolymer.

Alternatively, unsaturated epoxides can be used to generate the monofunctionally unsaturated and preferentially OH terminated polyalkylene oxide derivatives.

In another preferred embodiment unsaturated epoxides, preferred examples are 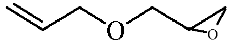 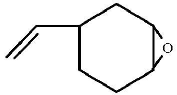 are reacted with prepolymerized polyalkylene oxide diols or prepolymerized polyalkylene oxide diamines like Jeffamines® of the types outlined above yielding statistical or block copolymer derivatives.

Alternatively, these unsaturated epoxides can be reacted with alkylene oxides according to the above concepts yielding statistical or block copolymer derivatives. Again, this method opens up the possibility to attach two or more polyalkylene oxide arms to one X moiety.

Not limiting examples for preferred structure poly SiH functionalised siloxane precursors are
Linear siloxanes of the types
M-D_{b1}-D^{H}_{b2}-M
M-D_{b1}-D^{H}_{b2}-M^{H}
M^{H}-D_{b1}-D^{H}_{b2}-M^{H}

Branched and star like siloxanes of the types
M^{H}-D_{b1}-D^{H}_{b2}-T(D_{b1}-D^{H}_{b2}-M^{H})-M^{H}
M^{H}-D_{b1}-D^{H}_{b2}-Q(D_{b1}-D^{H}_{b2}-M^{H})₂-M^{H}
Cyclic siloxanes of the type
(D_{b1}-D^{H}_{b2})ₑ
Q rich resin like siloxanes of the type
(Q_{d}-Mₐ₁-M^{H}ₐ₂-D_{b1}-D^{H}_{b2}-T_{c1}-T^{H}_{c2})ₑ, preferred (Q_{d}-Mₐ₁-M^{H}ₐ₂)ₑ
cubic systems like
Q₈M^{H}₈.

Further preferred SiH precursors are described in JP2009185169 A, e.g.

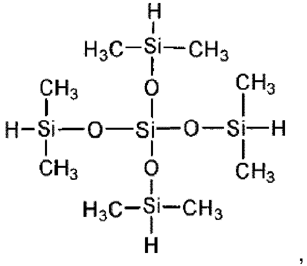

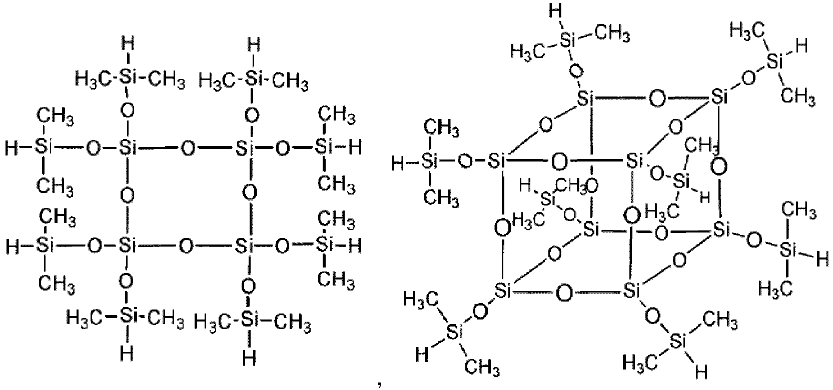

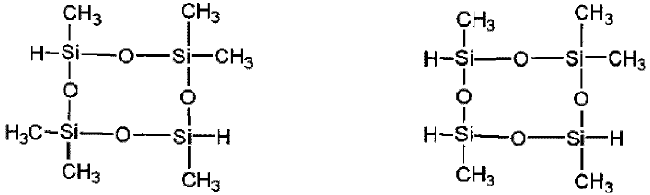

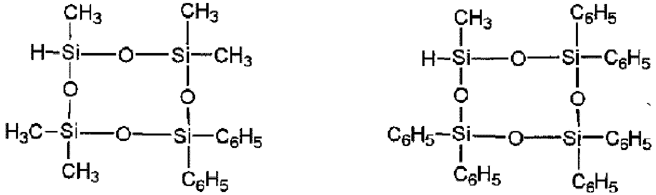

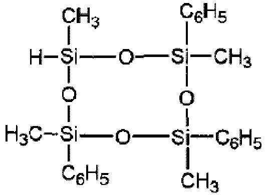

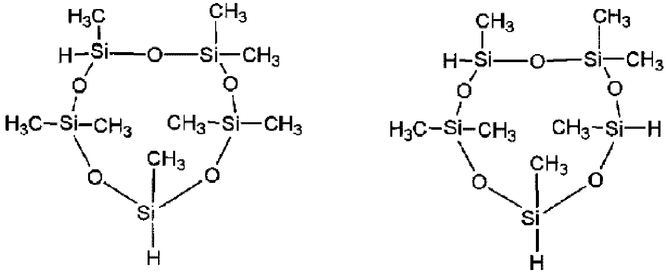

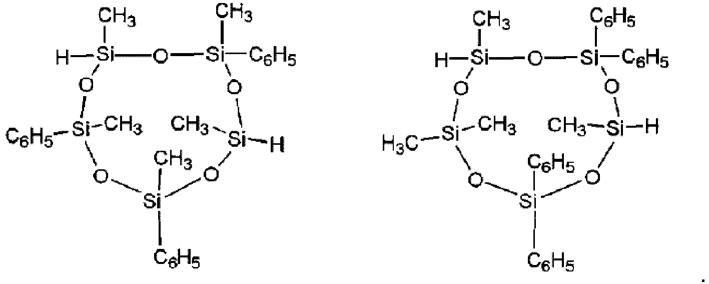

Hydrosilylation reaction takes place in the presence of metal catalysts as is well-known to those skilled in the art and include for example. For example platinum, palladium, rhodium, ruthenium, nickel, iridium, metal compounds, like salts or metal organic compounds can be mentioned.

The reaction of the one polysiloxane compound a) of the formula (I):

Z[-X(-A-Yₙ)_{q}]ₘ (I)

as defined above with the polyisocyanates b), in particular, those having Y = -OH , may take place in the absence or presence of small quantities of typical catalysts which promote the formation of urethanes. Suitable catalysts are, for example, tertiary amines, such as diazabicyclooctane (DABCO), and organotin compounds, for example dialkyl tin (IV) salts of aliphatic carboxylic acids, such as dibutyl tin dilaurate and dibutyl tin dioctoate. The quantity of catalyst is preferably no more than 1 % by weight, based on the polysiloxane a), for example 0.01 to 0.5 % by weight and, more particularly, 0.02 to 0.3 % by weight. In a preferred variant, no catalyst is used. The necessary reaction temperatures are of course dependent upon the reactivity of the polysiloxane a) used, upon the polyisocyanate and upon the type and quantity of catalyst used, if any. They are generally in the range from 20 to 100 °C and more particularly in the range from 35 to 80 °C. It goes without saying that the reaction of the polysiloxane a) with the polyisocyanates b) is carried out preferably in the absence of moisture (<2,000 ppm, preferably, <500 ppm).

The crosslinking or curing step with the composition of the present invention can be carried out in various ways.

In one preferred embodiment of the invention, the article coated with the uncrosslinked coating composition is subjected to humidity of the atmosphere.

In another preferred embodiment the coating composition of the invention is that mixed with a cross-linking agent as described above, including polyfunctional isocyanate reactive organic compounds, like polyols or polyamines in particular. They can be also used sterically hindered polyamines, like polyaspartic acid esters, to increase curing time or pot life. Basically, suitable crosslinking agents are any polyfunctional compounds of which the functional groups react with the isocyanate groups of the polysiloxane to form a bond.

The hydrogel coatings according to the present invention manufactured using star-shaped isocyanate functional polysiloxane compounds effectively prevent the adsorption of proteins and cells and can be used for many applications, for example in the hygiene and bioanalysis sectors. Such a use is therefore also, among others, a subject of the present invention. A further subject of the present invention is the use of the star-shaped isocyanate functional polysiloxane compounds according to the present invention, derivatives thereof, in anti-soiling agents for temporary or permanent finishing of surfaces. An essential prerequisite for this is the hydrophilic surface behavior simultaneously with low contact angle hysteresis. The hydrophilicity of the surface on the one hand interferes with the adsorption and adhesion of protein- and grease-containing stains, and on the other hand permits efficient wetting with cleaning agents, with the result that contaminants can be separated from the substrate more easily than with hydrophobic surfaces. The dewetting, or complete runoff of the cleaning solution, characterized by the lower contact angle hysteresis furthermore effectively prevents redeposition of dirt, proteins any biofilms onto the freshly cleaned surfaces.

A further use according to the present invention of the star-shaped isocyanate functional polyorganosiloxane compounds used in the coating agents according to the present invention, consists in the use thereof as additives in cleaning agents and washing agents for hard and soft surfaces, such as those used, for example, in the sanitary or kitchen sector, in order to prevent or reduce staining or re-staining, in hair-care agents, textile treatment agents, wall, siding, and joint treatment agents, in agents for treating vehicles, e.g. windows or hulls of these vehicles, such as automobiles, aircraft, ships, or boats (anti-fouling), and in agents for internal and external coating of containers in order to enable, for example, loss-free emptying of the containers, or in agents for coating bioreactors and heat exchangers, for example in order to prevent the adhesion of microorganisms. A further use according to the present invention of the star-shaped isocyanate functional polyorganosiloxane compounds used in the coating agents according to the present invention, is represented by use in coatings to influence the growth or crystallization of solids onto the surface. Because of their sealed structure, their hydrophilicity, and the ease with which they can be chemically functionalized (for example with entities), it is possible with the hydrogel layers according to the present invention, in principle, to adjust the biological situation in the context of biomineralization procedures. One example of a typical biomineralization procedure that may be named is the formation of mussel shells from calcium carbonate, which formation is controlled by specifically structured and functionalized hydrophilic polymer layers. The coating prevent e.g. the adherence of biofilms and tube worms. Nature teaches here that by way of the details of the chemical structure of such hydrophilic polymers, the growth of solids out of solution can be promoted and/or controlled, or else prevented. Lime crystallization onto surfaces may be named here as a technically and economically relevant growth process. The growth of lime can be prevented by way of the hydrogel layers according to the present invention, optionally by adding suitable entities. Lime deposition is also prevented, beyond the substrate action discussed here, by the fact that as mentioned, water is shed from the coated surfaces and crystallization is thus prevented because of this simple physical effect. The hydrogel-based anti-lime coating can be of a permanent or else a temporary nature.

A further use according to the present invention of the star-shaped isocyanate functional polyorganosiloxane compounds used in the coating agents according to the present invention, is in the manufacture of microarrays or sensors for bioanalytical purposes or for coating microfluidic components or for coating microcannulae and capillary systems, for example for the introduction of genetic material into cells. Here the hydrogel coating on the one hand permits the selective coupling of biomolecules to the coating if the latter has, for example, receptors bound to it as an entity, and on the other hand it is notable for a particularly low affinity for unspecific binding of biomolecules. The hydrogel coatings are thus particularly suitable as a coating primer of substrates for bioanalysis systems.

The subjects of the present invention are therefore also anti-soiling agents, cleaning agents and washing agents for hard and soft surfaces, hair-care agents, textile treatment agents, wall, siding, and joint treatment agents, containing the star-shaped isocyanate functional polysiloxane compounds according to the present invention.

A further use according to the present invention of the star-shaped isocyanate functional polysiloxane compounds used in the coating agents according to the present invention, is the provision of surfaces with modified, in particular reduced, friction properties. If the coatings are, for example, applied onto textiles, a more pleasant "hand" is produced; when applied to hair, for example, compatibility is improved. The use of these compounds to decrease static electric charges is also a subject of this invention. Stable hydrophilic coatings on, for example, hair prevent negative electrostatic effects over long periods. The same also applies to textiles. A further use according to the present invention of the star-shaped isocyanate functional polysiloxane compounds used in the coating agents according to the present invention, consists in fixing or retaining dyes on fibers by way of the hydrogel coating on textiles, either because of the hydrogel structure itself or because of additional functionalities that are introduced preferably by way of the aforementioned entities. A color protection effect is thereby achieved that can be utilized, for example, in a no-sort laundry detergent, i.e. a laundry detergent with which colored and white laundry can be washed.

The present invention is illustrated by means of the following examples. Those examples are to be understood as not limiting the scope of the invention.

### Examples

### Example 1

219.2 g (0.484 mol C=C) of an allyl polyether Breox of Cognis having the average formula

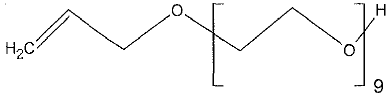

30.8 g (0.0367 mol SiH) of a mixture containing of a tetrafunctional ('four armed') SiH functionalized siloxane of the average approximated formula

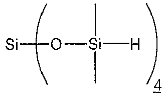

having 11.92 mmol SiH/g and a solvent and 0.09 g N,N-dibutylaminoethanol (for the suppression of undesired crosslinking of polyethersiloxanes to each other) are mixed and heated to 110 °C, 0.08g (10 ppm Pt) Lamoureaux-Pt-hydrosilylation catalyst are added. The reaction temperature increases to 130 °C and is maintained there for 3 hrs. An SiH conversion of > 95 % was found by volumetric determination. The product is treated with active carbon and filtered through a Seitz K300 filter. Yield: 220 g of a transparent, slightly brownish product comprising hydroxy-functional polysiloxane prepolymer and unreacted allyl polyether.

### Example 2

20 g (0.18 mol NCO) isophorone diisocyanate (IPDI), 28.7 g methoxypropylacetate and 46.9 g (0.09 mol C-OH) of the product obtained of example 1 were mixed. 0.5 g dibutyl tin dilaurate was added dropwise to the reaction mixture. The temperature increases to 42 °C. Afterwards, the reaction mixture was stirred for 2 h at room temperature. An OH conversion of > 95 % was found by NCO titration. Yield: 88 g slightly brownish product comprising NCO-functional polysiloxane-polyurethane prepolymer.

### Example 3

235.2 g (0.52 mol C=C) of an allyl polyether Breox of Cognis having the average formula 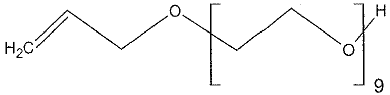 36.19 g (0.37 mol SiH) of a SiH functionalized siloxane mixture of the average formula [QM^{H}] with a ratio Q : M^{H} = 1 : 2.1 and a solvent
and 0.08 g N,N-dibutylaminoethanol are mixed and heated to 140 °C. 0.08 g (10ppm Pt) Lamoureaux-Pt-hydrosilylation catalyst are added. The reaction temperature increases temporarily to >150 °C and is maintained at 130 °C for 3 hrs. An SiH conversion of > 95 % of SiH-groups was found by volumetric determination. Volatiles are stripped off at 150 °C / 10mbar. Yield: 250 g of a transparent, slightly brownish product comprising a hydroxy-functional polysiloxane prepolymer and unreacted allyl polyether.

### Example 4

20 g (0.18 mol NCO) isophorone diisocyanate (IPDI), 28.7g methoxypropylacetate and 46.9 g (0.092 mol C-OH) of the product obtained in example 3 are mixed. 0.5 g dibutyl tin dilaurate is added dropwise to the reaction mixture. The temperature increases to 38 °C. Afterwards the reaction mixture was stirred for 2h at room temperature. An OH conversion of > 95 % was found by NCO titration. Yield: 90g slightly brownish product comprising NCO-functional polysiloxane-polyurethane prepolymer.

### Example 5

390.2 g (0.51 mol C=C) of an allyl polyether 80MA70 having the average formula

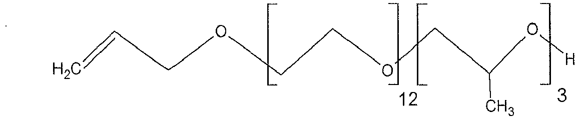

31.4g (0.374 mol SiH) of a mixture containing of a tetrafunctional ('four armed') SiH functionalized siloxane of the average approximated formula 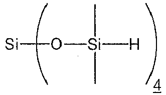 having 11.92 mmol SiH/g and a solvent and 0.08g N,N-dibutylaminoethanol are mixed and heated to 140 °C. 0.12 g (10ppm Pt) Lamoureaux-Pt-hydrosilylation catalyst are added. The polyether is a EO-,PO- blockpolymer with terminal PO units. The reaction temperature increases temporarily to >150 °C and is maintained at 130 °C for 3 hrs. An SiH conversion of > 95 % was found by volumetric determination. Volatiles where stripped off at 150 °C / 10 mbar. Yield: 400 g of a transparent, slightly brownish product comprising hydroxy-functional polysiloxane prepolymer and unreacted allyl polyether.

### Example 6

20 g (0.18 mol NCO) isophorone diisocyanate (IPDI), 28.7g methoxypropylacetate and 73.2g (0.09 mol C-OH) of the product obtained in example 5 were mixed. 0.5 g dibutyl tin dilaurate was added dropwise to the reaction mixture. The reaction mixture was stirred for 2 h at room temperature. An OH conversion of > 95 % was found by NCO titration. Yield: 119 g slightly brownish product comprising NCO-functional polysiloxane-polyurethane prepolymer.

### Example 7

326.2 g (0.428 mol C=C) of an allyl polyether Unilube 80MA70 having the average formula

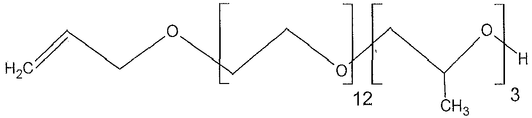

27.5 g of a SiH functionalized siloxane mixture of the average formula showing a ratio of Q : M^{H} = 1 : 2,04 providing (0.25 mol SiH)
and 0.06 g N,N-dibutylaminoethanol are mixed and heated to 140 °C. 0.09 g (10ppm Pt) Lamoureaux-Pt-hydrosilylation catalyst are added. The reaction temperature increases temporarily to >150 °C and is maintained at 130°C for 3 hrs. An SiH conversion of > 95% was found by volumetric determination. Volatiles where stripped off at 150 °C / 10mbar. Yield: 330 g of a transparent, slightly brownish product comprising hydroxy-functional polysiloxane prepolymer and unreacted allyl polyether.

### Example 8

20g (0.18 mol NCO) isophorone diisocyanate (IPDI), 28.7g methoxypropylacetate and 73.2g (0,083 mol C-OH) of the product obtained in example 7 were mixed. 0,5 g dibutyl tin dilaurate was added drop wise to the reaction mixture. The temperature increases to 28 °C. Afterwards the reaction mixture was stirred for 2 h at room temperature. An OH conversion of > 95 % was found by NCO titration. Yield: 118 g slightly brownish product comprising NCO-functional polysiloxane-polyurethane prepolymer.

### Example 9

213,8g (0,472 mol C=C) of an allyl polyether of the average formula 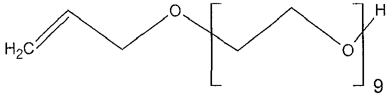 36.9 g (0,37 mol SiH) of a polycodimethylmethylhydrogensiloxane showing a SiH functionality of in average of about 17 of the average formula

M₂D₇D^{H}₁₇

and 0.08 g N,N-dibutylaminoethanol are mixed and heated to 140 °C. 0.08 g (10 ppm Pt) Lamoureaux-Pt-hydrosilylation catalyst are added. The reaction temperature increases temporarily to >150 °C and is maintained at 130 °C for 3 hrs. A SiH conversion of > 95 % was found by volumetric determination. Volatiles where stripped off at 150 °C an vacuum of <10mbar. Yield: 250 g of a transparent, slightly brownish product comprising hydroxy-functional polysiloxane prepolymer and unreacted allyl polyether.

### Example 10

20g (0.18 mol NCO) isophorone diisocyanate (IPDI), 28.7g methoxypropylacetate and 46.9g (0.09 mol C-OH) of the product obtained in example 9 were mixed. 0.5 g dibutyl tin dilaurate was added drop wise to the reaction mixture. The temperature increases to 38 °C. Afterwards the reaction mixture was stirred for 2 h at room temperature. A slightly brownish product comprising NCO functional polyorganosiloxane polyurethane prepolymer is obtained. This material showed a certain increase of the viscosity indicating a partial precondensation via IPDI reacting with both NCO functions.

### Application and test of invented examples:

The solved polymers of the examples 2 and 6 are spray applied to a film of an approx. 50 µm dry-film thickness onto PVC panels and cured under interaction of ambient air at 25 °C 50 % humidity. Curing time was 48 hours.

### References of comparison panels

1) Panel coated with Cu containing anti-fouling coating Relius Ecoship.
2) Uncoated panel

The static sea water exposure has been done by Limnomar, Labor fuer limnische/marine Forschung und vergleichende Pathology, Norderney, Germany on their test station of the isle Norderney in the North Sea.

It was observed that on the panels with the coatings of example 2 and 6 after 2 weeks in the sea water did not show coverage with foulings, while the untreated reference already showed a significant fouling film. After 4 weeks some larves of tube-worms have settled on the surface with the examples 2 and 6 - but with very soft adhesion. They could be removed just with the fingertips or a slight water spill. The uncoated reference showed parallel already heavy coverage with foulings. The reference panel with the biocidic coating showed slight coverage with a biofilm.
It seems to be evident, that if the test would have been done not under static conditions but with dynamic tools that the tube-worms would have been removed and the panels with the example 2 and 6 would remain uncovered.

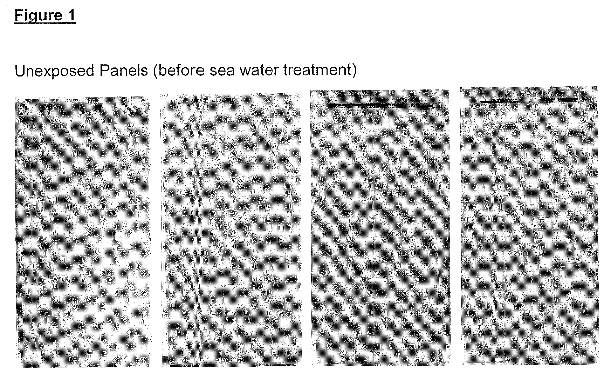

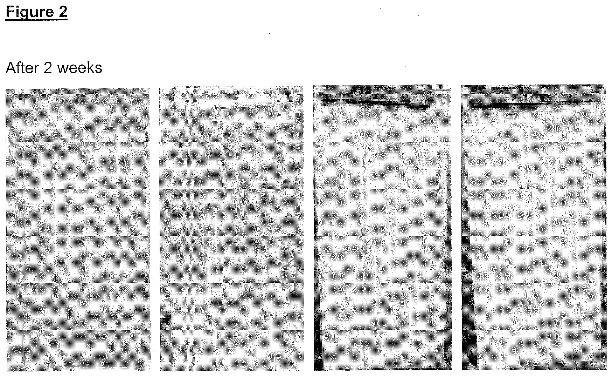

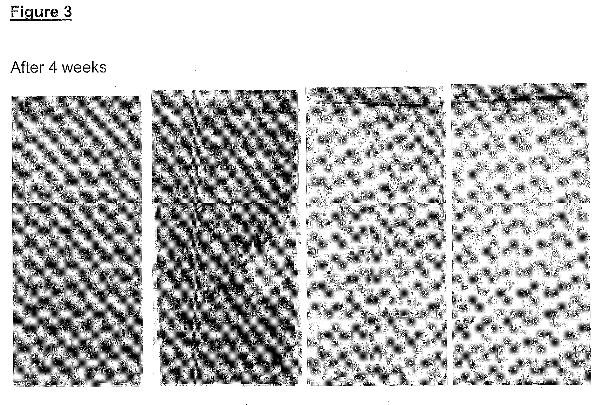

### Description of the Figures 1 - 3

Each figure shows 4 panels. The tested panels show from left to right:
Relius Ecoship (reference product),
uncoated panel,
panel coated with the composition of example 2,
panel coated with the composition of example 6.

Figure 1: unexposed panels (before sea water treatment)
Figure 2: after 2 weeks of sea water treatment
Figure 3: after 4 weeks of sea water treatment.

## Claims

1. A process for coating substrates, which comprises applying the reaction product obtained by the reaction of at least one polyorganosiloxane compound a) of the formula (I):
Z[-X(-A-Yₙ)_{q}]ₘ (I)
wherein
Z denotes a polyorganosiloxane unit,
X denotes a chemical bond or an organic residue having 1 to 50 carbon atoms, wherein X is bond to a silicon atom of the polyorganosiloxane unit via a carbon atom,
A denotes a hydrophilic polymeric unit, which may be the same or different unit in the compound of formula (I) comprising as hydrophilic moieties those selected from poly-C₂-C₄-alkylene oxide groups, polyetherester groups, polyetheramide groups, polyoxazolidone groups, polyvinyl alcohol groups, homo- and copolymer groups that contain at least 50 wt % polymerized-in N-vinylpyrrolidone, homo- and copolymers that contain at least 30 wt % polymerized-in acrylamide and/or methacrylamide, homo- and copolymer groups that contain at least 30 wt % polymerized-in acrylic acid and/or methacrylic acid, or A denotes a hydrophilic polymeric unit, which may be the same or different unit in the compound of formula (I) selected from polyether groups,
Y is selected from -OH, -SH, -NH₂, and -NHR⁴, wherein R⁴ is hydrocarbyl group having up to 10 carbon atoms,
q is from 1 to 5,
m is from 3 to 100,
n is from 1 to 5,
and at least one polyisocyanate b), with the proviso that the molar ratio of the components a) and b) is such that the reaction product contains reactive isocyanate groups, or
a polyorganosiloxane-polyisocyanate of the formula:
Z{-X[-A-[Y'-C(=O)-NH-E-(NCO)ₚ]ₙ]_{q}}ₘ (III)
wherein
the group Z, X, A, q, m, n are each as defined above,
Y' denotes a group derived from the addition of the group Y to the NCO-group,
E denotes an organic residue,
p is from 1 to 5,
onto a substrate and curing the reaction product to obtain a coating onto the substrate.

2. A process according to claim 1, wherein the group Z is a polyorganosiloxane moiety of the formula
[MₐD_{b}T_{c}Q_{d}]ₑ (II)
wherein
M = R₃SiO_{1/2},
D = R₂SiO_{2/2},
T = RSiO_{3/2},
Q = SiO_{4/2},
with
a = 0-50,
b = 0-500,
c = 0-50,
d = 0-50,
e = 1-500,
wherein
a+b+c ≥ 1, and wherein
R is selected from R¹, -OR², and a divalent residue R³, wherein R¹ is an organic residue bond to a silicone atom via a carbon atom, R² is an organic residue bond to the oxygen atom via a carbon atom, R³ is a divalent organic residue connecting two siloxy groups, with the proviso that the group R comprises at least one group R¹, wherein such polyorganosiloxane moiety Z has free valencies at the silicon atoms to bind the groups
[-X(-A-Yₙ)_{q}] as defined above.

3. A process according to claims 1 or 2, wherein the group X is aliphatic organic residue having up to 20 carbon atoms, optionally comprising one to three heteroatoms.

4. A process according to claims 1 or 2, wherein the group A is a polyether moiety comprising group.

5. A process according to claims 1 or 2, wherein q is 2.

6. A process according to claims 1 or 2, wherein m is from 3 to 60.

7. A process according to any of claims 1 to 6, wherein the polyisocyanate b) is selected from the group of aliphatic and/or aromatic polyisocyanates.

8. A process according to any of claims 2 to 7, wherein Z comprises at least one group R¹ substituted by one or more groups of the formula
-Si(OR³)₃₋ₓ(R⁴)ₓ
in which x is an integer from 0 to 2 and R³ and R⁴ is selected from C₁ to C₄-alkyl, or C₂ to C₆-alkenyl, or phenyl, and wherein
R¹ is preferably selected from C₁ to C₂₀₀ alkyl or C₂ to C₂₀ alkenyl, the alkyl group being optionally containing one or more groups selected from -O-, -NH-, -C(O)- and -C(S)-.

9. Use of the reaction product as defined in claim 1, or the polyorganosiloxane-polyisocyanate (III) according to claim 1 for the manufacture of anti-fouling coatings.

## Patentansprüche

1. Ein Verfahren zur Beschichtung von Substraten, welches das Auftragen des Reaktionsproduktes, das durch die Reaktion von mindestens einer Polyorganosiloxanverbindung a) der Formel (I):
Z[-X(-A-Yₙ)_{q}]ₘ (I)
worin
Z eine Polyorganosiloxaneinheit bezeichnet,
X eine chemische Bindung oder einen organischen Rest, der 1 bis 50 Kohlenstoffatome aufweist, wobei X über ein Kohlenstoffatom an ein Siliziumatom der Polyorganosiloxaneinheit gebunden ist, bezeichnet,
A eine hydrophile polymere Einheit bezeichnet, die in der Verbindung der Formel (I) die gleiche oder eine unterschiedliche Einheit sein kann, die als hydrophile Gruppen diejenigen umfasst, die aus Poly-C2-C4-Alkylenoxidgruppen, Polyetherestergruppen, Polyetheramidgruppen, Polyoxazolidongruppen, Polyvinylalkoholgruppen, Homo- und Copolymergruppen, die mindestens 50 Gew.-% einpolymerisierten N-Vinylpyrrolidons enthalten, Homo- und Copolymeren, die mindestens 30 Gewichts-% einpolymerisierten Acrylamids und/oder Methacrylamids enthalten, Homo- und Copolymergruppen, die mindestens 30 Gewichts-% einpolymerisierter Acrylsäure und/oder Methacrylsäure ausgewählt sind, oder A eine hydrophile polymere Einheit bezeichnet, die in der Verbindung der Formel (I) diei gleiche oder eine unterschiedliche Einheit ausgewählt aus Polyethergruppen sein kann,
Y aus -OH, -SH, -NH₂, und -NHR⁴, wobei R⁴ eine Kohlenwasserstoffgruppe mit bis zu 10 Kohlenstoffatomen ist, ausgewählt ist,
q von 1 bis 5 ist,
m von 3 bis 100 ist,
n von 1 bis 5 ist,
und mindestens einem Polyisocyanat b), mit der Maßgabe, dass das molare Verhältnis der Komponenten a) und b) ein solches ist, dass das Reaktionsprodukt reaktive Isocyanatgruppen enthält, oder
einem Polyorganosiloxan-Polyisocyanat der Formel:
Z{-X[-A-[Y'-C(=O)-NH-E-(NCO)ₚ]ₙ]_{q}}ₘ (III)
worin
die Gruppen Z, X, A, q, m, und n jeweils wie oben definiert sind,
Y' eine Gruppe bezeichnet, die sich von der Addition der Gruppe Y an die NCO-Gruppe ableitet,
E einen organischen Rest bezeichnet,
p von 1 bis 5 ist,
erhalten wird,
auf ein Substrat und das Härten des Reaktionsproduktes, um eine Beschichtung auf dem Substrat zu erhalten, umfasst.

2. Ein Verfahren gemäß Anspruch 1, wobei die Gruppe Z eine Polyorganosiloxangruppe der Formel
[MₐD_{b}T_{c}Q_{d}]ₑ (II)
ist, worin
M = R₃SiO_{1/2},
D = R₂SiO_{2/2},
T = RSiO_{3/2},
Q = SiO_{4/2},
mit
a = 0-50.
b = 0-500,
c = 0-50,
d = 0-50,
e = 1-500,
wobei
a+b+c ≥ 1 ist, und wobei
R aus R¹, -OR², und einem zweiwertigen Rest R³ ausgewählt ist, wobei R¹ ein über ein Kohlenstoffatom an ein Siliziumatom gebundener organischer Rest ist, R² ein über ein Kohlenstoffatom an ein Sauerstoffatom gebundener organischer Rest ist, R³ ein zweiwertiger organischer Rest ist, der zwei Siloxygruppen miteinander verbindet, mit der Maßgabe, dass die Gruppe R mindestens eine Gruppe R¹ umfasst, wobei eine solche Polyorganosiloxangruppe Z freie Valenzen am Siliziumatom hat, um die wie oben definierten Gruppen [-X(-A-Yₙ)_{q}] zu binden.

3. Ein Verfahren gemäß Anspruch 1 oder 2, wobei die Gruppe X ein aliphatischer organischer Rest ist, der bis zu 20 Kohlenstoffatome aufweist, und wahlweise ein bis drei Heteroatome umfasst.

4. Ein Verfahren gemäß Anspruch 1 oder 2, wobei die Gruppe A eine eine Polyethergruppe umfassende Gruppe ist.

5. Ein Verfahren gemäß Anspruch 1 oder 2, wobei q 2 ist.

6. Ein Verfahren gemäß Anspruch 1 oder 2, wobei m von 3 bis 60 ist.

7. Ein Verfahren gemäß einem der Ansprüche 1 bis 6, wobei das Polyisocyanat b) aus der Gruppe der aliphatischen und/oder aromatischen Polyisocyanate ausgewählt ist.

8. Ein Verfahren gemäß einem der Ansprüche 2 bis 7, wobei Z mindestens eine Gruppe R¹ umfasst, die durch eine oder mehrere Gruppen der Formel
-Si(OR³)₃₋ₓ(R⁴)ₓ
substituiert ist, in der x eine ganze Zahl von 0 bis 2 und R³ und R⁴ aus C₁- bis C₄-Alkyl- oder C₂- bis C₆-Alkenyl-, oder Phenylresten ausgewählt sind, und worin
R¹ bevorzugt aus C₁- bis C₂₀₀-Alkyl- oder C₂- bis C₂₀-Alkenylgruppen ausgewählt ist, wobei die Alkylgruppe wahlweise eine oder mehrere aus -O-, -NH-, -C(O)- und -C(S)- ausgewählte Gruppen enthält.

9. Die Verwendung des wie in Anspruch 1 definierten Reaktionsprodukts, oder des Polyorganosiloxan-Polyisocyanats (III) gemäß Anspruch 1 zur Herstellung von Antifouling-Beschichtungen.

## Revendications

1. Procédé de revêtement de substrats, qui comprend l'application du produit de réaction obtenu par la réaction d'au moins un composé polyorganosiloxane a) de la formule (I) :
Z[-X(-A-Yₙ)_{q}]ₘ (I)
où
Z désigne un motif polyorganosiloxane,
X désigne une liaison chimique ou un résidu organique ayant 1 à 50 atome(s) de carbone,
où X est lié à un atome de silicium du motif polyorganosiloxane par un atome de carbone,
A désigne un motif polymère hydrophile, qui peut être le même motif ou un motif différent dans le composé de la formule (I) comprenant comme fragments hydrophiles ceux choisis parmi des groupes oxyde de polyalkylène en C₂ à C₄, des groupes polyétherester, des groupes polyétheramide, des groupes polyoxazolidone, des groupes alcool polyvinylique, des groupes homopolymères et copolymères qui contiennent au moins 50% en poids de N-vinylpyrrolidone polymérisé, des homopolymères et copolymères qui contiennent au moins 30% en poids d'acrylamide et/ou de méthacrylamide polymérisé(s), des groupes homopolymères et copolymères qui contiennent au moins 30% en poids d'acide acrylique et/ou d'acide méthacrylique polymérisé(s), ou A désigne un motif polymère hydrophile, qui peut être le même motif ou un motif différent dans le composé de la formule (I) choisi parmi des groupes polyéther,
Y est choisi parmi -OH, -SH, -NH₂ et -NHR⁴, où R⁴ est un groupe hydrocarbyle ayant jusqu'à 10 atomes de carbone,
q est compris entre 1 et 5,
m est compris entre 3 et 100,
n est compris entre 1 et 5,
et d'au moins un polyisocyanate b), à condition que le rapport molaire des composants a) et b) soit tel que le produit de réaction contient des groupes isocyanate réactifs, ou
d'un polyorganosiloxane-polyisocyanate de la formule :
Z{-X[-A-[Y'-C(=O)-NH-E-(NCO)ₚ]ₙ]_{q}}ₘ (III)
où les groupes Z, X, A, q, m, n sont chacun tels que définis ci-dessus,
Y' désigne un groupe dérivé de l'ajout du groupe Y au groupe NCO,
E désigne un résidu organique,
p est compris entre 1 et 5.
sur un substrat et le durcissement du produit de réaction pour obtenir un revêtement sur le substrat.

2. Procédé selon la revendication 1, dans lequel le groupe Z est un fragment polyorganosiloxane de la formule
[MₐD_{b}T_{c}Q_{d}]ₐ (II)
où
M = R₃SiO_{1/2},
D = R₂SiO_{2/2},
T = RSiO_{3/2},
Q = SiO_{4/2},
avec
a = 0 à 50,
b = 0 à 500,
c = 0 à 50,
d = 0 à 50,
e = 1 à 500,
où a + b + c ≥ 1 et où
R est choisi parmi R¹, -OR² et un résidu divalent R³, où R¹ est un résidu organique lié à un atome de silicium par un atome de carbone, R² est un résidu organique lié à l'atome d'oxygène par un atome de carbone, R³ est un résidu organique divalent reliant deux groupes siloxy, à condition que le groupe R comprenne au moins un groupe R¹, où un tel fragment polyorganosiloxane Z a des valences libres au niveau des atomes de silicium pour lier les groupes [-X(-A-Yₙ)_{q}] tels que définis ci-dessus.

3. Procédé selon la revendication 1 ou 2, dans lequel le groupe X est un résidu organique aliphatique ayant jusqu'à 20 atomes de carbone, comprenant facultativement un à trois hétéroatomes.

4. Procédé selon la revendication 1 ou 2, dans lequel le groupe A est un groupe comprenant un fragment polyéther.

5. Procédé selon la revendication 1 ou 2, dans lequel q vaut 2.

6. Procédé selon la revendication 1 ou 2, dans lequel m est compris entre 3 et 60.

7. Procédé selon l'une des revendications 1 à 6, dans lequel le polyisocyanate b) est choisi dans le groupe des polyisocyanates aliphatiques et/ou aromatiques.

8. Procédé selon l'une des revendications 2 à 7, dans lequel Z comprend au moins un groupe R¹ substitué par un ou plusieurs groupe(s) de la formule
-Si(OR³)₃₋ₓ(R⁴)ₓ
où x est un nombre entier allant de 0 à 2 et R³ et R⁴ sont choisis parmi un alkyle en C₁ à C₄, un alcényle en C₂ à C₆ et un phényle, et où
R¹ est de préférence choisi parmi un alkyle en C₁ à C₂₀₀ et un alcényle en C₂ à C₂₀, le groupe alkyle contenant facultativement un ou plusieurs groupe(s) choisi(s) parmi -O-, -NH-, -C(O)- et -C(S)-.

9. Utilisation du produit de réaction tel que défini dans la revendication 1 ou du polyorganosiloxane-polyisocyanate (III) selon la revendication 1 pour la fabrication de revêtements antisalissure.
